# EUROPEAN PATENT SPECIFICATION

(11) **EP 2 613 477 B1**
(45) Date of publication and mention of the grant of the patent: **08.08.2018**
(21) Application number: 11789159.8
(22) Date of filing: 28.05.2011
(51) Int. Cl.: H04L 12/24, H04L 12/715, H04L 12/703, H04L 12/707

(54) **METHOD FOR TRIGGERING ROUTE SWITCHING AND SERVICE PROVIDER-END PROVIDER EDGE DEVICE**
VERFAHREN ZUR AUSLÖSUNG EINES ROUTENWECHSELS UND DIENSTANBIETERSEITIGE PROVIDER-EDGE-VORRICHTUNG
PROCÉDÉ DE DÉCLENCHEMENT D'UNE COMMUTATION DE VOIE D'ACHEMINEMENT ET DISPOSITIF DE PÉRIPHÉRIE CÔTÉ FOURNISSEUR DE SERVICES

(30) Priority: 08.09.2010 CN 201010277423
(43) Date of publication of application: 10.07.2013
(73) Proprietor: Huawei Technologies Co., Ltd., Longgang District Shenzhen, Guangdong 518129 (CN)
(72) Inventor: WANG, Haibo, Guangdong 518129 (CN)
(74) Representative: Pfenning, Meinig & Partner mbB
(86) International application number: PCT/CN2011/074829
(87) International publication number: WO 2011/150780

(56) References cited:
- WO-A2-2008/045255
- CN-A- 101 795 232
- CN-A- 101 820 397
- CN-A- 102 143 047
- US-A1- 2007 171 817
- US-A1- 2009 201 831
- US-A1- 2010 061 227

## Description

### FIELD OF THE INVENTION

Embodiments of the present invention relate to a communication technology, and in particular, to a method for triggering a route failover and a service provider-end provider edge device.

### BACKGROUND OF THE INVENTION

In a communication network, due to factors such as the construction cost and reconstruction period, not all devices in the network are high-processing performance devices. Usually, for an edge device of the communication network, because the edge device is required to support relative few functions, a device with relatively low processing performance is used as the edge device. Accordingly, the routing capacity of the edge device is small.

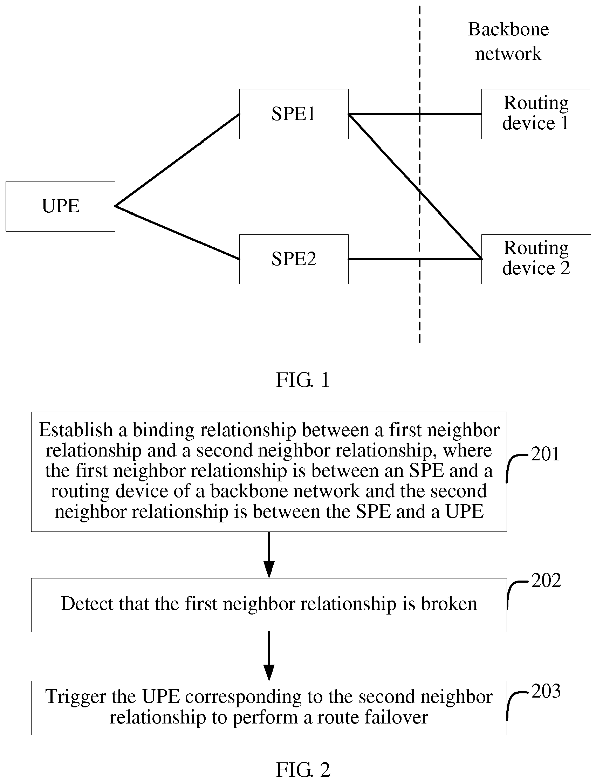

Referring to FIG. 1, an existing networking structure includes: a user-end provider edge device (UPE), a service provider-end provider edge device (SPE), and a backbone network, where: the UPE connects a user terminal, the SPE connects a routing device in the backbone network, and one UPE usually connects multiple SPEs. The UPE, as an edge device of the network, is a device with relatively low processing performance. Therefore, only a few of routes are stored on the UPE.

The process of implementing the communication service based on the network structure shown in FIG. 1 mainly includes the following: The routing device in the backbone network advertises various routes to each SPE, and each SPE stores the received various routes; each SPE advertises the route (referred to a default route) between the UPE and the SPE to the UPE; subsequently, after receiving data of the user terminal, the UPE selects an SPE according to the default route, and sends the data to the selected SPE; after receiving the data, the SPE sends the data to the backbone network according to the stored various routes in the backbone network.

As seen from the above description, the SPE does not advertise plenty of routes in the backbone network to the UPE, and instead only advertises a default route to the UPE. Therefore, it is ensured that the UPE stores only a few of routes, so that the UPE may be a device with relatively low processing performance, thereby satisfying networking requirements.

A failure may occur on the link between the SPE and the routing device in the backbone network, so that the corresponding route cannot forward the data of the user terminal. Therefore, a route failover is required. The process of implementing a route failover in the prior art includes: on each SPE, presetting a specified route, which needs to be monitored, in the backbone network; monitoring, by each SPE, the specified route; if an SPE, for example, SPE1, detects that routes stored on itself do not include the specified route, determining that a link with a routing device of the backbone network fails, and notifying a UPE of withdrawing a default route with SPE1; subsequently, sending, by the UPE, according to a default route advertised by SPE2, received data of a user terminal to SPE2, thereby implementing a route failover on the UPE.

However, in the process of implementing a route failover in the prior art, because the number of routes in the backbone network is huge and can reach hundreds of thousands, the SPE cannot monitor all routes, but can only monitor a preset few of specified routes. As a result, when the link on a non-specified route fails, the SPE cannot know the failure, and thus cannot trigger the UPE to perform a route failover when the link fails.

US 2007/171817 A 1 discloses a data communication system for a VPWS (Virtual Private Wire Service) network, comprising a normal path and a redundant path. Each path includes a customer edge CE1 at one customer site, one access line AL1, AL3 connected to the customer edge CE1 and a provider edge PE1, PE3 at one edge part of the VPWS network, an affiliated virtual circuit VC1, VC2 in the VPWS network connected to the provider edge PE1, PE3 and an provider edge PE2, PE4 at another edge part of the VPWS network, another access line AL2, AL4 connected to the provider edge PE2, PE4 at the other edge part of the VPWS network and another customer edge CE2 at another customer side. When a link down failure occurs in the normal path in an access line AL between a customer edge CE and a provider edge PE, this failure is detected and it is switched from the normal path to the redundant path.

WO 2008/045255 A2 discloses techniques for protecting multi-segment pseudowires by using precomputed backup paths in a network environment. The network environment includes a number of Customer Edge (CE) routers, a number of Provider Edge (PE) routers and a packet switched (PS) network. The network comprises a plurality of pseudowires elements (routers, switches, etc.) forming a multi-segment pseudowire. When a path failure is detected in a multi-segment pseudowire the detected failure is signaled to a head-end Provider Edge of the multi-segment pseudowire. Then a new path for the pseudowire is chosen originating from the head-end Provider Edge.

US 2010/061227 A1 discloses a method for reducing routing convergence at an edge of a communication network. The network comprises customer edge routers connected to provider edge routers of a service provider network. P routers or provider core routers function as transit routers of the core network. A provider edge router is typically connected to one or more provider core routers. Each provider edge router is coupled to a respective mated pair of provider core routers. A provider edge router streams all traffic to the same IP address over two identical cost paths to a mated pair of provider core routers. For example, a provider edge router may stream one traffic flow over the physical link to one of the mated pair of provider core routers while sending another traffic flow over the physical link to the other of the mated pair of provider core routers. The links are essentially identical. Any link failure that occurs between one of the mated pair of provider core routers and a provider edge router may be addressed by the provider core router that experiences the link failure by simply directing traffic destined for the provider edge router to the other provider core router of the mated pair.

CN 101 795 232 A discloses a network failure treating method comprising a link circuit switching for avoiding defects and accelerate the network convergence.

CN 101 572 666 A discloses a method for flow switching in a virtual private local area service network, wherein a master pseudo-wire and a backup pseudo-wire connected with user-oriented provider edge equipment are disposed in the network. The method comprises adding virtual switching instances adopting the same master and backup pseudo-wires into a fast switching group. When detecting that the master pseudo-wire fails, controlling each virtual switching instance in the fast switching group to forward a message by the backup pseudo-wire.

### SUMMARY OF THE INVENTION

Embodiments of the present invention provide a method for triggering a route failover and an SPE, which can trigger a UPE to perform a route failover when a link fails.

A method for triggering a route failover is defined in the appended independent Claim 1. An SPE according to the present invention is defined in the appended independent Claim 5. The method for triggering a route failover and the SPE according to embodiments of the present invention use the point that the SPE needs to establish a neighbor relationship with a routing device and a UPE, and establishes a binding relationship between a first neighbor relationship and a second neighbor relationship, where the first neighbor relationship is between the SPE and the routing device of a backbone network and the second neighbor relationship is between the SPE and the UPE. Because the broken first neighbor relationship indicates that the link between the SPE and the routing device fails and communication cannot be performed, when it is detected that the first neighbor relationship is broken, the second neighbor relationship can be associated according to the previously established binding relationship, and the UPE corresponding to the second neighbor relationship can be triggered to perform a route failover. Therefore, when the link fails, the UPE can be triggered to perform a route failover, so that the UPE can transmit data through a route that does not fail, which improves reliability of data transmission and further improves network performance.

### BRIEF DESCRIPTION OF THE DRAWINGS

To make the technical solutions of the embodiments of the present invention or in the prior art clearer, the accompanying drawings used in the description of the embodiments or the prior art are briefly described hereunder. Evidently, the accompanying drawings illustrate some exemplary embodiments of the present invention and persons of ordinary skill in the art may obtain other drawings based on these drawings without creative efforts.
FIG. 1 is a schematic diagram of a networking structure in the prior art;
FIG. 2 is a flow chart of a method for triggering a route failover according to an embodiment of the present invention;
FIG. 3 is a flow chart of a method for triggering a route failover according to Embodiment 1 of the present invention;
FIG. 4 is a flow chart of a method for triggering a route failover according to Embodiment 2 of the present invention;
FIG. 5 is a flow chart of a method for triggering a route failover according to Embodiment 3 of the present invention;
FIG. 6 is a schematic structural diagram of an SPE according to an embodiment of the present invention;
FIG. 7 is a schematic structural diagram of Embodiment 1 of an SPE according to the present invention;
FIG. 8 is a schematic structural diagram of Embodiment 2 of an SPE according to the present invention;
FIG. 9 is a schematic structural diagram of Embodiment 3 of an SPE according to the present invention;
FIG. 10 is a schematic structural diagram of Embodiment 4 of an SPE according to the present invention;
FIG. 11 is a schematic structural diagram of Embodiment 5 of an SPE according to the present invention;
FIG. 12 is a schematic structural diagram of Embodiment 6 of an SPE according to the present invention;
FIG. 13 is a schematic structural diagram of Embodiment 7 of an SPE according to the present invention;
FIG. 14 is a schematic structural diagram of Embodiment 8 of an SPE according to the present invention;
FIG. 15 is a schematic structural diagram of Embodiment 9 of an SPE according to the present invention; and
FIG. 16 is a schematic structural diagram of Embodiment 10 of an SPE according to the present invention.

### DETAILED DESCRIPTION OF THE EMBODIMENTS

To make the objectives, technical solutions, and advantages of the embodiments of the present invention clearer, the technical solutions provided by the embodiments of the present invention are hereinafter described clearly and completely with reference to the accompanying drawings. Evidently, the described embodiments are only some exemplary embodiments of the present invention, rather than all embodiments of the present invention. All other embodiments, which can be derived by persons of ordinary skill in the art from the embodiments given herein without any creative effort, shall fall within the scope of the present invention.

An embodiment of the present invention provides a method for triggering a route failover. Referring to FIG. 2, the method includes:
Step 201: Establish a binding relationship between a first neighbor relationship and a second neighbor relationship, where the first neighbor relationship is between an SPE and a routing device of a backbone network and the second neighbor relationship is between the SPE and a UPE.
Step 202: Detect whether the first neighbor relationship is broken, and when it is detected that the first neighbor relationship is broken, execute step 203.
Step 203: Trigger the UPE corresponding to the second neighbor relationship to perform a route failover.

It can be seen that, the method for triggering a route failover according to the embodiment of the present invention uses the point that the SPE needs to establish a neighbor relationship with a routing device and a UPE, and establishes a binding relationship between a first neighbor relationship and a second neighbor relationship, where the first neighbor relationship is between the SPE and the routing device of a backbone network and the second neighbor relationship is between the SPE and the UPE. Because the broken first neighbor relationship indicates that the link between the SPE and the routing device of the backbone network fails and that communication cannot be performed, when it is detected that the first neighbor relationship is broken, the second neighbor relationship can be associated according to the previously established binding relationship, and the UPE corresponding to the second neighbor relationship can be triggered to perform a route failover, so that the UPE can transmit data through a route that does not fail, which improves reliability of data transmission and further improves network performance.

In the practical implementation, there are many manners for triggering the UPE to perform a route failover. For example, the following three modes may be used:
Manner 1: Withdraw the route between the SPE and the UPE.
Manner 2: Break the neighbor relationship between the SPE and the UPE.
Manner 3: Make the priority of the route between the SPE and the UPE lower than the priorities of the routes between other SPEs and the UPE.

With respect to the above three manners for triggering the UPE to perform a route failover, a specific embodiment is provided respectively hereunder for description.

### Embodiment 1

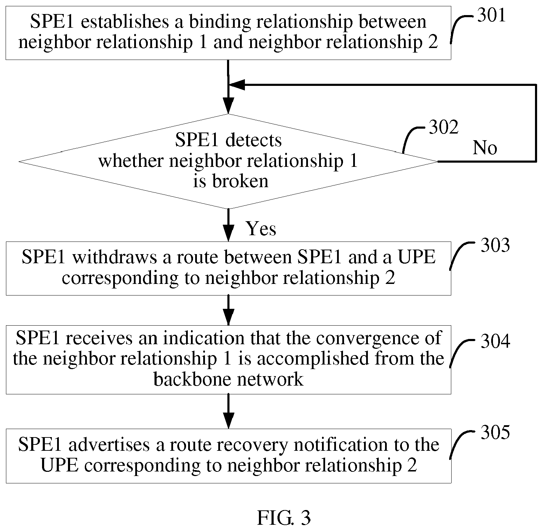

In Embodiment 1, the above manner 1 (withdraw the route between the SPE and the UPE) is used as the manner for triggering the UPE to perform a route failover. Referring to FIG. 1 and FIG. 3, taking SPE1 as an example, the process of implementing a route failover in Embodiment 1 of the present invention includes:
Step 301: SPE1 establishes a binding relationship between a neighbor relationship of SPE1 and the routing device of the backbone network (referred as neighbor relationship 1) and a neighbor relationship of SPE1 and the UPE (referred as neighbor relationship 2).

Herein, the purpose of establishing the binding relationship between neighbor relationship 1 and neighbor relationship 2 is to associate neighbor relationship 2 by monitoring neighbor relationship 1 so as to trigger a route failover subsequently. In addition, the specific implementation of establishing the binding relationship between neighbor relationship 1 and neighbor relationship 2 may be as follows: storing neighbor relationship 1 and neighbor relationship 2 in a mapping table, so that neighbor relationship 1 can be mapped to neighbor relationship 2.

In actual networking, SPE1 may be connected to one or multiple routing devices in the backbone network. Therefore, SPE1 may establish neighbor relationships 1 with one or multiple routing devices in the backbone network.

For the case that SPE1 establishes neighbor relationships 1 with multiple routing devices, referring to FIG. 1, SPE1 is connected to two routing devices in the backbone network, namely, routing device 1 and routing device 2. SPE1 establishes a neighbor relationship 1 (for ease of subsequent description, this neighbor relationship 1 here is described as neighbor relationship 11) with routing device 1, and SPE1 establishes another neighbor relationship 1 (for ease of subsequent description, this neighbor relationship 1 here is described as neighbor relationship 12) with routing device 2, where both neighbor relationship 11 and neighbor relationship 12 can be categorized as neighbor relationship 1. Accordingly, in this step, the establishing of binding relationship is specifically as follows: neighbor relationship 1 is bound to neighbor relationship 2, and neighbor relationship 1 includes neighbor relationship 11 and neighbor relationship 12.

After establishing neighbor relationships with routing device 1 and routing device 2, respectively, SPE1 learns routes in the backbone network from the two routing devices. With respect to the case that the routes learned from the two routing devices are the same or different, differentiated processing is required to subsequently trigger a route failover process. Therefore, this step optionally includes the following:
If the learned routes are the same, it indicates that routing device 1 and routing device 2 are active routing device-standby routing device relationship. That is, the connections between the two routing devices and SPE1 are active connection-standby connection relationship, and correspond to the same path in the backbone network. Therefore, the failover of the route between the UPE and SPE1 to other routes is triggered in a case that both the above active connection and standby connection fail and cannot perform communication. For implementing such processing in the subsequent process, in this step, in the established binding relationship, neighbor relationship 11 and neighbor relationship 12 of neighbor relationship 1 are connected by a logical operator "AND", for example, "neighbor relationship 11 and neighbor relationship 12". Using the logical operator "AND" to connect indicates that a subsequent route failover can be triggered only when both neighbor relationship 11 and neighbor relationship 12 are broken.

If the learned routes are different, it indicates that routing device 1 and routing device 2 are not active routing device-standby routing device relationship. That is, the connections between the two routing devices and SPE1 are not active connection-standby connection relationship, and correspond to different paths in the backbone network. Therefore, the failover of the route between the UPE and SPE1 to other routes is triggered in a case that either of the connections between the two routing devices and SPE1 fails and cannot perform communication. For implementing such processing in the subsequent process, in this step, in the established binding relationship, neighbor relationship 11 and neighbor relationship 12 of neighbor relationship 1 are connected by a logical operator "OR", for example, "neighbor relationship 11 or neighbor relationship 12". Using the logical operator "OR" to connect indicates that a subsequent route failover is triggered when either neighbor relationship 11 or neighbor relationship 12 is broken.

Step 302: SPE1 detects whether neighbor relationship 1 is broken, and if so, execute step 303, or otherwise, return to step 302.

Detecting whether the neighbor relationship is broken is based on existing solution, and is not described in detail herein, but an example may be given as follows: detecting whether neighbor relationship 1 is broken by detecting a KeepAlive packet or bidirectional forwarding detection protocol (BFD) packet.

The process of this step is specifically as follows: According to the established binding relationship, if multiple neighbor relationships 1 (neighbor relationship 11 and neighbor relationship 12) are connected by "AND", which corresponds to the case that the routes learned by SPE1 from routing device 1 and routing device 2 are the same, it is necessary to detect whether multiple neighbor relationships 1 (neighbor relationship 11 and neighbor relationship 12) are all broken, and if so, the processing of triggering a route failover subsequently is executed, or otherwise, the detection continues.

If multiple neighbor relationships 1 (neighbor relationship 11 and neighbor relationship 12) are connected by "OR", which corresponds to the case that the routes learned by SPE1 from routing device 1 and routing device 2 are different, it is only necessary to detect whether any neighbor relationships 1 (neighbor relationship 11 or neighbor relationship 12) is broken, and if so, the processing of subsequently triggering a route failover is executed, or otherwise, the detection continues.

Step 303: SPE1 withdraws a route between SPE1 and the UPE corresponding to neighbor relationship 2.

An implementation process of this step is as follows: SPE1 sends a route withdrawal notification to the UPE corresponding to neighbor relationship 2.

After receiving the route withdrawal notification, the UPE withdraws the route with SPE1, and after receiving the data of a user terminal subsequently, sends the data to SPE2 through the default route with SPE2, thereby implementing a route failover on the UPE.

To further ensure that the processing of route on the UPE can be recovered when neighbor relationship 1 between SPE1 and the routing device is recovered upon recovery of the failure of the link between SPE1 and the routing device, Embodiment 1 may further include the following steps:
Step 304: SPE1 receives an indication that the convergence of neighbor relationship 1 is accomplished from the backbone network.

After the failure of the link between SPE1 and the routing device of the backbone network such as routing device 1 is recovered, routing device 1 advertises the route in the backbone network to SPE1. Upon the advertising of route is accomplished, routing device 1 sends the indication that the convergence of neighbor relationship 1 is accomplished to SPE1, notifying that route advertising is accomplished, so that neighbor relationship 1 between SPE1 and routing device 1 is recovered.

Step 305: SPE1 advertises a route recovery notification to the UPE corresponding to neighbor relationship 2.

After receiving the route recovery notification sent by SPE1, the UPE recovers the route with SPE1.

### Embodiment 2

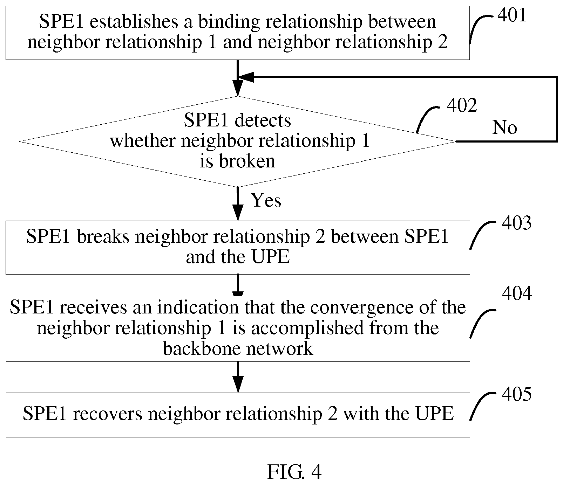

In Embodiment 2, the above manner 2 (break the neighbor relationship between the SPE and the UPE) is used as the manner for triggering the UPE to perform a route failover. Referring to FIG. 1 and FIG. 4, taking SPE1 as an example, the process of implementing a route failover in Embodiment 2 of the present invention includes:
Step 401 to step 402: Same as step 301 to step 302
Step 403: SPE1 breaks neighbor relationship 2 between SPE1 and the UPE.

Herein, an implementation for breaking neighbor relationship 2 by SPE1 is as follows: SPE1 closes the Transmission Control Protocol (TCP) connection with the UPE corresponding to neighbor relationship 2.

After breaking neighbor relationship 2, the UPE can determine to perform a route failover, and after the data of the user terminal is subsequently received, send the data to SPE2 through the default route with SPE2, thereby implementing a route failover on the UPE.

To further ensure that the processing of route on the UPE can be recovered when the neighbor relationship 1 between SPE1 and the routing device is recovered upon recovery of the failure between SPE1 and the routing device, Embodiment 2 may further include the following steps:
Step 404: Same as step 304.
Step 405: SPE1 recovers neighbor relationship 2 with the UPE.

Herein, an implementation for recovering neighbor relationship 2 by SPE1 is as follows: SPE1 opens the TCP connection with the UPE corresponding to neighbor relationship 2.

### Embodiment 3

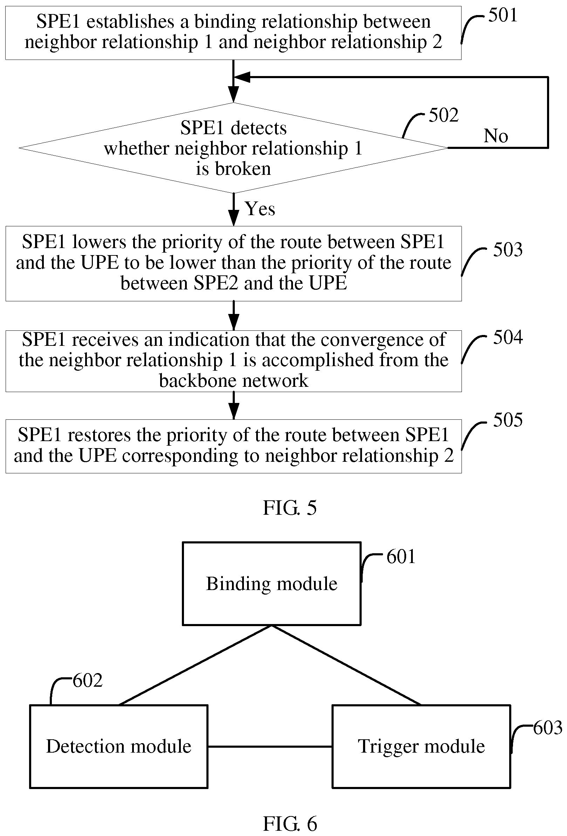

In Embodiment 3, the above manner 3 (the priority of the route between the SPE and the UPE is lower than the priorities of the routes between other SPEs and the UPE) is used as the manner for triggering the UPE to perform a route failover. Referring to FIG. 1 and FIG. 5, taking SPE1 as an example, the process of implementing a route failover in Embodiment 3 of the present invention includes:
Step 501 to step 502: Same as step 301 to step 302.
Step 503: SPE1 lowers the priority of the route between SPE1 and the UPE corresponding to neighbor relationship 2 to be lower than the priority of the route between SPE2 and the UPE.

When the UPE selects an SPE to receive the data of the user terminal according to the default route advertised by each SPE, the UPE can make a selection according to the length of an as-path field in the default route advertised by each SPE, for example, compare the length (referred as length 1) of the as-path field in the default route advertised by SPE1 and the length (referred as length 2) of the as-path field in the default route advertised by SPE2, and send the data of the user terminal to the SPE corresponding to the as-path field having the smaller length.

Based on the above point that the UPE selects the SPE to receive data according to the length of the as-path field, optionally, the process of this step is as follows: SPE1 continues to advertise a default route to the UPE corresponding to neighbor relationship 2, and increases the length of the as-path field in the default route to be greater than the length of the as-path field in the default route advertised by SPE2 to the UPE.

After the priority of the route between SPE1 and the UPE is lowered, upon receiving the data of the user terminal, the UPE sends the data to SPE2 through the default route with a higher priority with SPE2, thereby implementing a route failover on the UPE.

To further ensure that the processing of route on the UPE can be recovered when neighbor relationship 1 between SPE1 and the routing device is recovered upon recovery of the failure between SPE1 and the routing device, Embodiment 3 may further include the following steps:
Step 504: Same as step 304.
Step 505: SPE1 restores the priority of the route between SPE1 and the UPE corresponding to neighbor relationship 2.

An implementation process of this step is: SPE1 advertises a default route to the UPE corresponding to neighbor relationship 2, and restores the length of the as-path field in the default route to a configured value.

An embodiment of the present invention further provides an SPE. Referring to FIG. 6, the SPE includes:
a binding module 601, configured to establish a binding relationship between a first neighbor relationship and a second neighbor relationship, where the first neighbor relationship is between the SPE and a routing device of a backbone network and the second neighbor relationship is between the SPE and a UPE;
a detection module 602, configured to detect whether the first neighbor relationship is broken; and
a trigger module 603, configured to trigger the UPE corresponding to the second neighbor relationship to perform a route failover when the detection module 602 detects that the first neighbor relationship is broken.

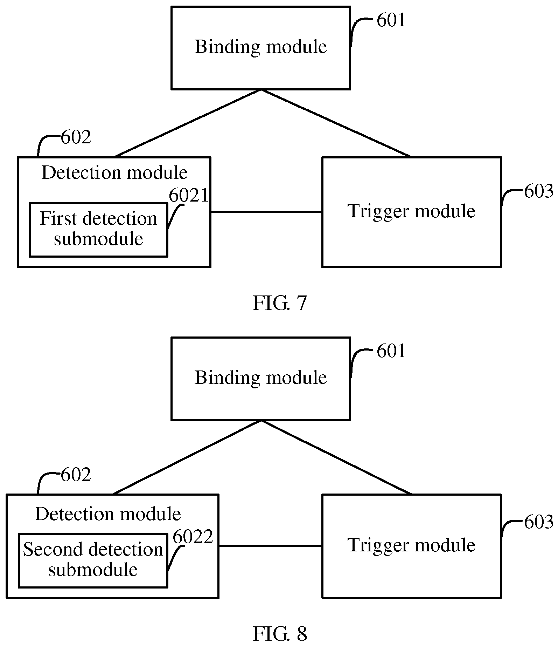

Optionally, referring to FIG. 7, in Embodiment 1 of the SPE in the present invention, the detection module 602 may include a first detection submodule 6021, configured to detect whether the first neighbor relationship is broken by detecting a KeepAlive packet; or
referring to FIG. 8, in Embodiment 2 of the SPE in the present invention, the detection module 602 may include a second detection submodule 6022, configured to detect whether the first neighbor relationship is broken by detecting a BFD packet.

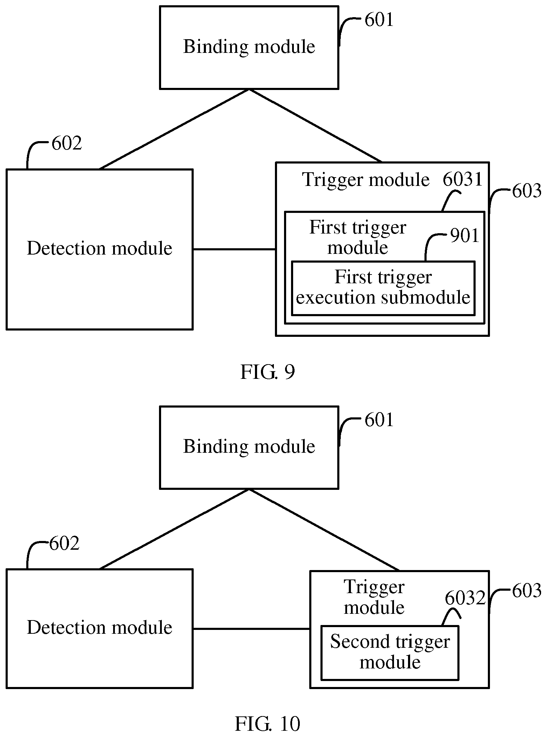

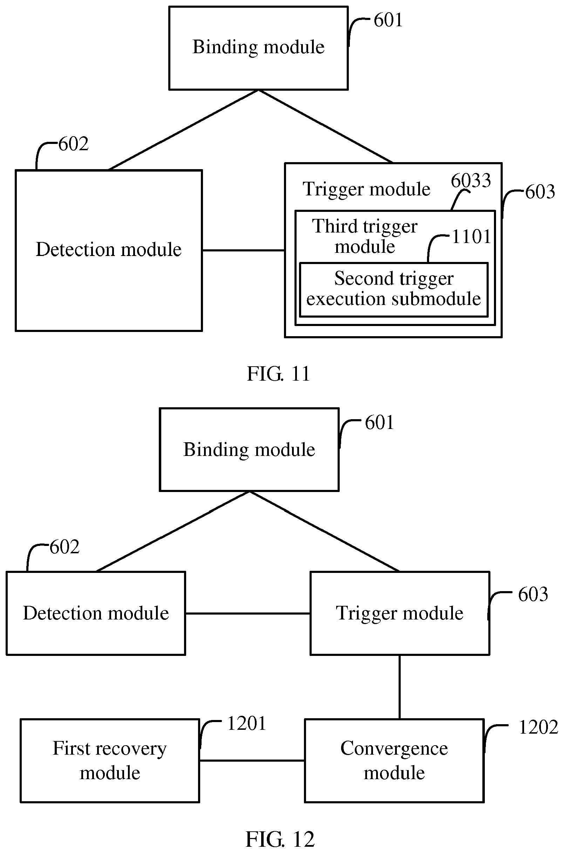

Optionally, referring to FIG. 9, in Embodiment 3 of the SPE in the present invention, the trigger module 603 includes a first trigger module 6031, where the first trigger module 6031 is configured to break the route between the SPE and the UPE corresponding to the second neighbor relationship; or
referring to FIG. 10, in Embodiment 4 of the SPE in the present invention, the trigger module 603 includes a second trigger module 6032, where the second trigger module 6032 is configured to break the second neighbor relationship; or
referring to FIG. 11, in Embodiment 5 of the SPE in the present invention, the trigger module 603 includes a third trigger module 6033, where the third trigger module 6033 is configured to lower the priority of the route between the SPE and the UPE corresponding to the second neighbor relationship to be lower than the priorities of the routes between other SPEs and the UPE.

Referring to FIG. 9, the first trigger module 6031 may further include a first trigger execution submodule 901, where the first trigger execution submodule 901 is configured to send a route withdrawal notification to the UPE corresponding to the second neighbor relationship; or
referring to FIG. 11, the third trigger module 6033 includes a second trigger execution submodule 1101, where the second trigger execution submodule 1101 is configured to advertise a default route to the UPE corresponding to the second neighbor relationship, where the length of the as-path field in the default route is increased, to be greater than the length of the as-path field in the default route advertised by other SPEs to the UPE.

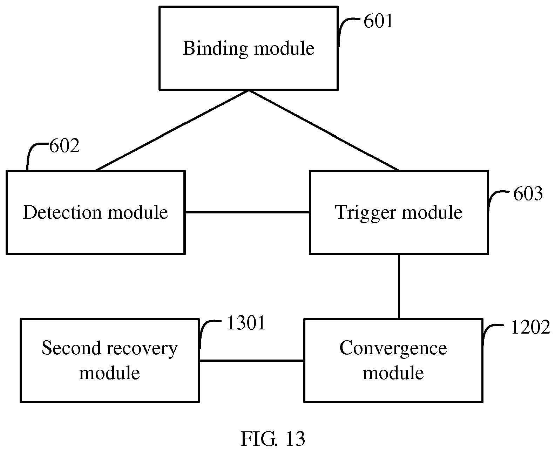

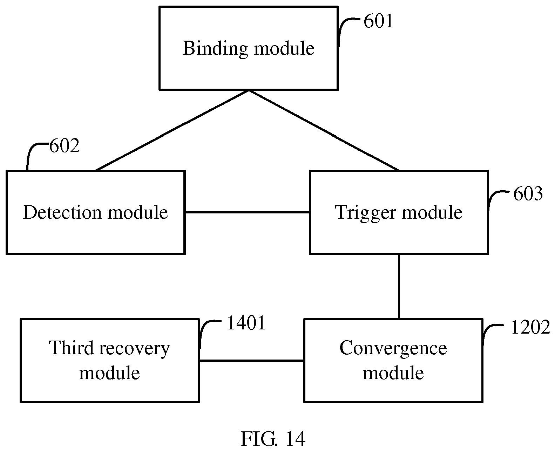

Referring to FIG. 12, in Embodiment 6 of the SPE in the present invention, the SPE may further include a convergence module 1202 and a first recovery module 1201; or referring to FIG. 13, in Embodiment 7 of the SPE in the present invention, the SPE provided by the embodiment of the present invention may further include a convergence module 1202 and a second recovery module 1301; or, referring to FIG. 14, in Embodiment 8 of the SPE in the present invention, the SPE provided by the embodiment of the present invention may further include a convergence module 1202 and a third recovery module 1401.

Referring to FIG. 12 to FIG. 14, the convergence module 1202 is configured to receive an indication that the convergence of the first neighbor relationship is accomplished from the backbone network;
the first recovery module 1201 is configured to advertise a route recovery notification to the UPE corresponding to the second neighbor relationship after the convergence module 1202 receives the that the convergence of the first neighbor relationship is accomplished;
the second recovery module 1301 is configured to recover the second neighbor relationship after the convergence module 1202 receives the that the convergence of the first neighbor relationship is accomplished; or
the third recovery module 1401 is configured to advertise the default route to the UPE corresponding to the second neighbor relationship after the convergence module 1202 receives the that the convergence of the first neighbor relationship is accomplished, where the length of the as-path field in the default route is restored to a configured value.

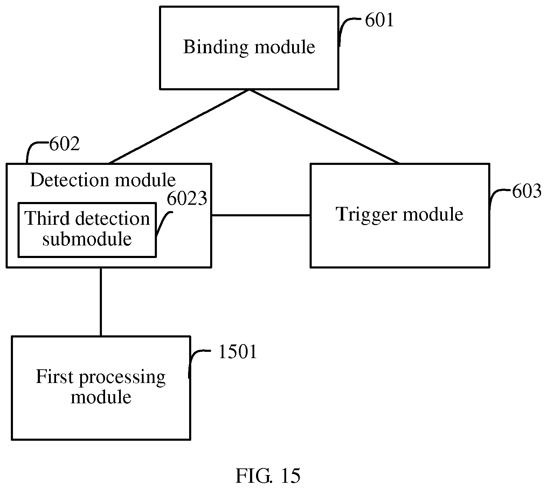

Referring to FIG. 15, in Embodiment 9 of the SPE in the present invention, the SPE may further include: a first processing module 1501, configured to establish the first neighbor relationships with multiple routing devices in the backbone network respectively, and after learning same routes from the multiple routing devices, use the logical operator "AND" to connect the multiple first neighbor relationships between the SPE and the multiple routing devices in the binding relationship; and
the detection module 602 includes a third detection submodule 6023, configured to detect whether all the multiple first neighbor relationships are broken.

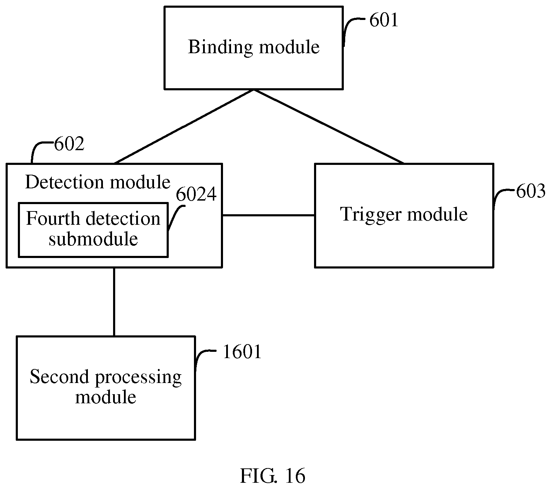

Referring to FIG. 16, in Embodiment 10 of the SPE in the present invention, the SPE may further include: a second processing module 1601, configured to establish the first neighbor relationships with multiple routing devices in the backbone network respectively, and after learning different routes from the multiple routing devices, use the logical operator "OR" to connect the multiple first neighbor relationships between the SPE and the multiple routing devices in the binding relationship; and
the detection module 602 includes a fourth detection submodule 6024, configured to detect whether any first neighbor relationship among the multiple first neighbor relationships is broken.

An embodiment of the present invention further provides a route failover system, where the system includes a UPE and any SPE provided by the above embodiments of the present invention.

Persons of ordinary skill in the art may understand that all or part of the steps in the method according to the embodiments can be implemented by hardware under the instruction of a program. The program may be stored in a computer readable storage medium and when the program runs, the steps in the method according to the embodiments are executed. The storage medium is any medium that can store program codes, such as a ROM, a RAM, a magnetic disk, or a CD-ROM.

Finally, it should be noted that the embodiments are intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments or make substitutions to some technical features thereof, without departing from the scope of the present invention.

## Claims

1. A method for triggering a route failover, comprising:
establishing (201; 301; 401; 501), by a service provider-end provider edge device, a binding relationship between a first neighbor relationship and a second neighbor relationship, wherein the second neighbor relationship is between the service provider-end provider edge device and a user-end provider edge device;
**characterized in that**
the first neighbor relationship is between the service provider-end provider edge device and a routing device of a backbone network; and by
establishing, by the service provider-end provider edge device, multiple first neighbor relationships with multiple routing devices in the backbone network respectively, learning routes from the multiple routing devices;
wherein with respect to the case that the routes learned from the multiple routing devices are the same or different, the following alternative processing steps for triggering the route failover process include:
for case 1: using a logical operator AND to connect the multiple first neighbor relationships in the established binding relationship if the learned routes are the same;
detecting whether the multiple first neighbour relationships are all broken; and
triggering the user-end provider edge device to perform the route failover by the service provider-end provider edge device if the multiple first neighbour relationships are all broken;
or
for case 2: connecting the multiple first neighbour relationships using a logical operator OR in the established binding relationship if the learned routes are different;
detecting whether any one of the multiple first neighbour relationships is broken; and
triggering the user-end provider edge device to perform the route failover by the service provider-end provider edge device if any one of the multiple first neighbour relationships is broken.

2. The method for triggering a route failover according to claim 1, wherein the triggering, by the service provider-end provider edge device, the user-end provider edge device corresponding to the second neighbor relationship to perform the route failover comprises:
breaking (303) a route between the service provider-end provider edge device and the user-end provider edge device corresponding to the second neighbor relationship; or
breaking (403) the second neighbor relationship; or
lowering (503) a priority of the route between the service provider-end provider edge device and the user-end provider edge device corresponding to the second neighbor relationship to be lower than priorities of routes between other service provider-end provider edge devices and the user-end provider edge device.

3. The method for triggering a route failover according to claim 2, wherein:
the breaking (303) a route between the service provider-end provider edge device and the user-end provider edge device corresponding to the second neighbor relationship comprises: sending a route withdrawal notification to the user-end provider edge device corresponding to the second neighbor relationship; and
the lowering (503) a priority of the route between the service provider-end provider edge device and the user-end provider edge device corresponding to the second neighbor relationship comprises: advertising a default route to the user-end provider edge device corresponding to the second neighbor relationship, wherein the length of an as-path field in the default route is increased to be greater than the length of an as-path field in a default route advertised by other service provider-end provider edge devices to the user-end provider edge device.

4. The method for triggering a route failover according to claim 3, further comprising: receiving (304; 404; 504), by the service provider-end provider edge device, an indication that the convergence of the first neighbor relationship is accomplished from the backbone network; and
advertising (305), by the service provider-end provider edge device, a route recovery notification to the user-end provider edge device corresponding to the second neighbor relationship; or
recovering (405), by the service provider-end provider edge device, the second neighbor relationship; or
advertising, by the service provider-end provider edge device, the default route to the user-end provider edge device corresponding to the second neighbor relationship, wherein the length of the as-path field in the default route is restored (505) to a configured value.

5. A service provider-end provider edge device, comprising:
a binding module (601), configured to establish (201; 301, 401; 501) a binding relationship between a first neighbor relationship and a second neighbor relationship, wherein the second neighbor relationship is between the service provider-end provider edge device and a user-end provider edge device;
**characterized in that**
the first neighbor relationship is between the service provider-end provider edge device and a routing device of a backbone network; and by
a first processing module (1501), configured to establish multiple first neighbor relationships with multiple routing devices in the backbone network respectively, and after learning routes from the multiple routing devices, use a logical operator AND to connect multiple first neighbor relationships between the service provider-end provider edge device and the multiple routing devices in the binding relationship if the learned routes are the same, or a second processing module (1601) configured to use a logical operator OR to connect multiple first neighbor relationships between the service provider-end provider edge device and the multiple routing devices in the binding relationship if the learned routes are different;
a detection module (602), configured to detect (202; 302; 402; 502); whether the first neighbor relationship is broken; wherein the detection module (602) comprises a first detection submodule (6021) configured to detect whether all the multiple first neighbor relationships are broken, and a second detection submodule (6022), configured to detect whether any first neighbor relationship among the multiple first neighbor relationships is broken;
and
a trigger module (603), configured to trigger (203) the user-end provider edge device corresponding to the second neighbor relationship to perform a route failover when the first detection submodule (6021) detects that the multiple first neighbor relationship are all broken, or when the second detection submodule (6022) detect any first neighbor relationship among the multiple first neighbor relationships is broken.

6. The service provider-end provider edge device according to claim 5, wherein the trigger module (603) comprises:
a first trigger module (6031), configured to break (303) a route between the service provider-end provider edge device and the user-end provider edge device corresponding to the second neighbor relationship; or
a second trigger module (6032), configured to break (403) the second neighbor relationship; or
a third trigger module (6033), configured to lower (503) a priority of the route between the service provider-end provider edge device and the user-end provider edge device corresponding to the second neighbor relationship to be lower than priorities of routes between other service provider-end provider edge devices and the user-end provider edge device.

7. The service provider-end provider edge device according to claim 6, wherein:
the first trigger module (6031) comprises a first trigger execution submodule (901), configured to send a route withdrawal notification to the user-end provider edge device corresponding to the second neighbor relationship; or
the third trigger module (6033)comprises a second trigger execution submodule (1101), configured to advertise a default route to the user-end provider edge device corresponding to the second neighbor relationship, wherein the length of an as-path field in the default route is increased to be greater than the length of an as-path field in a default route advertised by other service provider-end provider edge devices to the user-end provider edge device.

8. The service provider-end provider edge device according to claim 7, further comprising: a convergence module (1202), configured to receive (304, 404; 504) an indication that the convergence of the first neighbor relationship is accomplished from the backbone network; and
a first recovery module (1201), configured to advertise (305) a route recovery notification to the user-end provider edge device corresponding to the second neighbor relationship after the convergence module (1202) receives (304, 404; 504) the indication that the convergence of the first neighbor relationship is accomplished; or
a second recovery module (1301), configured to recover (405) the second neighbor relationship after the convergence module (1202) receives (404) the indication that the convergence of the first neighbor relationship is accomplished; or
a third recovery module (1401), configured to advertise the default route to the user-end provider edge device corresponding to the second neighbor relationship, wherein the length of the as-path field in the default route is restored (505) to a configured value.

9. A route failover system, comprising a user-end provider edge device and the service provider-end provider edge device according to any one of claims 5 to 8.

## Patentansprüche

1. Verfahren zur Auslösung eines "Route Failovers", umfassend:
Herstellen (201; 301; 401; 501), durch eine dienstanbieterseitige "Provider-Edge"-Vorrichtung, einer Bindungsbeziehung zwischen einer ersten Nachbarbeziehung und einer zweiten Nachbarbeziehung, wobei die zweite Nachbarbeziehung zwischen der dienstanbieterseitigen "Provider-Edge"-Vorrichtung und einer benutzerseitigen "Provider-Edge"-Vorrichtung besteht;
**dadurch gekennzeichnet, dass**
die erste Nachbarbeziehung zwischen der dienstanbieterseitigen "Provider-Edge"-Vorrichtung und einer "Routing"-Vorrichtung eines "Backbone"-Netzes besteht; und durch
Herstellen, durch die dienstanbieterseitige "Provider-Edge"-Vorrichtung, mehrerer erster Nachbarbeziehungen mit mehreren jeweiligen "Routing"-Vorrichtungen in dem "Backbone"-Netz, Lernen von Routen von den mehreren "Routing"-Vorrichtungen;
wobei je nachdem, ob die Routen, die von den mehreren "Routing"-Vorrichtungen gelernt werden, dieselben oder verschieden sind, die folgenden alternativen Verarbeitungsschritte zur Auslösung des "Route Failover"-Prozesses beinhalten: für Fall 1:
Verwenden eines logischen UND-Operators, um die mehreren ersten Nachbarbeziehungen in der hergestellten Bindungsbeziehung zu verbinden, falls die gelernten Routen dieselben sind;
Erkennen, ob die mehreren ersten Nachbarbeziehungen alle unterbrochen sind; und Ansteuern der benutzerseitigen "Provider-Edge"-Vorrichtung zum Durchführen des "Route Failovers" durch die dienstanbieterseitige "Provider-Edge"-Vorrichtung, falls die mehreren ersten Nachbarbeziehungen alle unterbrochen sind;
oder
für Fall 2:
Verbinden der mehreren ersten Nachbarbeziehungen unter Verwendung eines logischen ODER-Operators in der hergestellten Bindungsbeziehung, falls die gelernten Routen verschieden sind;
Erkennen, ob irgendeine der mehreren ersten Nachbarbeziehungen unterbrochen ist; und
Ansteuern der benutzerseitigen "Provider-Edge"-Vorrichtung zum Durchführen des "Route Failovers" durch die dienstanbieterseitige "Provider-Edge"-Vorrichtung, falls irgendeine der mehreren ersten Nachbarbeziehungen unterbrochen ist.

2. Verfahren zur Auslösung eines "Route Failovers" nach Anspruch 1, wobei das Ansteuern, durch die dienstanbieterseitige "Provider-Edge"-Vorrichtung, der benutzerseitigen "Provider-Edge"-Vorrichtung, die der zweiten Nachbarbeziehung entspricht, zum Durchführen des "Route Failovers" umfasst:
Unterbrechen (303) einer Route zwischen der dienstanbieterseitigen "Provider-Edge"-Vorrichtung und der benutzerseitigen "Provider-Edge"-Vorrichtung, die der zweiten Nachbarbeziehung entspricht; oder
Unterbrechen (403) der zweiten Nachbarbeziehung; oder
Verringern (503) einer Priorität der Route zwischen der dienstanbieterseitigen "Provider-Edge"-Vorrichtung und der benutzerseitigen "Provider-Edge"-Vorrichtung, die der zweiten Nachbarbeziehung entspricht, so dass sie niedriger ist als Prioritäten von Routen zwischen anderen dienstanbieterseitigen "Provider-Edge"-Vorrichtungen und der benutzerseitigen "Provider-Edge"-Vorrichtung.

3. Verfahren zur Auslösung eines "Route Failovers" nach Anspruch 2, wobei:
das Unterbrechen (303) einer Route zwischen der dienstanbieterseitigen "Provider-Edge"-Vorrichtung und der benutzerseitigen "Provider-Edge"-Vorrichtung, die der zweiten Nachbarbeziehung entspricht, umfasst: Senden einer Routenentfernungsbenachrichtigung an die benutzerseitige "Provider-Edge"-Vorrichtung, die der zweiten Nachbarbeziehung entspricht; und
das Verringern (503) einer Priorität der Route zwischen der dienstanbieterseitigen "Provider-Edge"-Vorrichtung und der benutzerseitigen "Provider-Edge"-Vorrichtung, die der zweiten Nachbarbeziehung entspricht, umfasst: Bekanntgeben einer Standardroute an die benutzerseitige "Provider-Edge"-Vorrichtung, die der zweiten Nachbarbeziehung entspricht, wobei die Länge eines "As-path"-Feldes in der Standardroute vergrößert wird, so dass sie größer als die Länge eines "As-path"-Feldes in einer Standardroute ist, die von anderen dienstanbieterseitigen "Provider-Edge"-Vorrichtungen an die benutzerseitige "Provider-Edge"-Vorrichtung bekanntgegeben wird.

4. Verfahren zur Auslösung eines "Route Failovers" nach Anspruch 3, welches ferner umfasst:
Empfangen (304; 404; 504), durch die dienstanbieterseitige "Provider-Edge"-Vorrichtung, einer Anzeige, dass die Konvergenz der ersten Nachbarbeziehung erfolgt ist, von dem "Backbone"-Netz; und
Bekanntgeben (305), durch die dienstanbieterseitige "Provider-Edge"-Vorrichtung, einer Routenwiederherstellungsbenachrichtigung an die benutzerseitige "Provider-Edge"-Vorrichtung, die der zweiten Nachbarbeziehung entspricht; oder
Wiederherstellen (405), durch die dienstanbieterseitige "Provider-Edge"-Vorrichtung, der zweiten Nachbarbeziehung; oder
Bekanntgeben, durch die dienstanbieterseitige "Provider-Edge"-Vorrichtung, der Standardroute an die benutzerseitige "Provider-Edge"-Vorrichtung, die der zweiten Nachbarbeziehung entspricht, wobei die Länge des "As-path"-Feldes in der Standardroute auf einen konfigurierten Wert wiederhergestellt wird (505).

5. Dienstanbieterseitige "Provider-Edge"-Vorrichtung, welche umfasst:
ein Bindungsmodul (601), das dafür ausgelegt ist, eine Bindungsbeziehung zwischen einer ersten Nachbarbeziehung und einer zweiten Nachbarbeziehung herzustellen (201; 301; 401; 501), wobei die zweite Nachbarbeziehung zwischen der dienstanbieterseitigen "Provider-Edge"-Vorrichtung und einer benutzerseitigen "Provider-Edge"-Vorrichtung besteht;
**dadurch gekennzeichnet, dass**
die erste Nachbarbeziehung zwischen der dienstanbieterseitigen "Provider-Edge"-Vorrichtung und einer "Routing"-Vorrichtung eines "Backbone"-Netzes besteht; und durch
ein erstes Verarbeitungsmodul (1501), das dafür ausgelegt ist, mehrere erste Nachbarbeziehungen mit mehreren jeweiligen "Routing"-Vorrichtungen in dem "Backbone"-Netz herzustellen und nach dem Lernen von Routen von den mehreren "Routing"-Vorrichtungen einen logischen UND-Operator zu verwenden, um mehrere erste Nachbarbeziehungen zwischen der dienstanbieterseitigen "Provider-Edge"-Vorrichtung und den mehreren "Routing"-Vorrichtungen in der Bindungsbeziehung zu verbinden, falls die gelernten Routen dieselben sind, oder ein zweites Verarbeitungsmodul (1601), das dafür ausgelegt ist, einen logischen ODER-Operator zu verwenden, um mehrere erste Nachbarbeziehungen zwischen der dienstanbieterseitigen "Provider-Edge"-Vorrichtung und den mehreren "Routing"-Vorrichtungen in der Bindungsbeziehung zu verbinden, falls die gelernten Routen verschieden sind;
ein Erkennungsmodul (602), das dafür ausgelegt ist zu erkennen (202; 302; 402; 502), ob die erste Nachbarbeziehung unterbrochen ist; wobei das Erkennungsmodul (602) ein erstes Erkennungs-Untermodul (6021) umfasst, das dafür ausgelegt ist zu erkennen, ob die mehreren ersten Nachbarbeziehungen alle unterbrochen sind, und ein zweites Erkennungs-Untermodul (6022), das dafür ausgelegt ist zu erkennen, ob irgendeine erste Nachbarbeziehung von den mehreren ersten Nachbarbeziehungen unterbrochen ist;
und
ein Ansteuermodul (603), das dafür ausgelegt ist, die benutzerseitige "Provider-Edge"-Vorrichtung, die der zweiten Nachbarbeziehung entspricht, zum Durchführen des "Route Failovers" anzusteuern (203), wenn das erste Erkennungs-Untermodul (6021) erkennt, dass die mehreren ersten Nachbarbeziehungen alle unterbrochen sind, oder wenn das zweite Erkennungs-Untermodul (6022) erkennt, dass irgendeine erste Nachbarbeziehung von den mehreren ersten Nachbarbeziehungen unterbrochen ist.

6. Dienstanbieterseitige "Provider-Edge"-Vorrichtung nach Anspruch 5, wobei das Ansteuermodul (603) umfasst:
ein erstes Ansteuermodul (6031), das dafür ausgelegt ist, eine Route zwischen der dienstanbieterseitigen "Provider-Edge"-Vorrichtung und der benutzerseitigen "Provider-Edge"-Vorrichtung, die der zweiten Nachbarbeziehung entspricht, zu unterbrechen (303); oder
ein zweites Ansteuermodul (6032), das dafür ausgelegt ist, die zweite Nachbarbeziehung zu unterbrechen (403); oder
ein drittes Ansteuermodul (6033), das dafür ausgelegt ist, eine Priorität der Route zwischen der dienstanbieterseitigen "Provider-Edge"-Vorrichtung und der benutzerseitigen "Provider-Edge"-Vorrichtung, die der zweiten Nachbarbeziehung entspricht, zu verringern (503), so dass sie niedriger ist als Prioritäten von Routen zwischen anderen dienstanbieterseitigen "Provider-Edge"-Vorrichtungen und der benutzerseitigen "Provider-Edge"-Vorrichtung.

7. Dienstanbieterseitige "Provider-Edge"-Vorrichtung nach Anspruch 6, wobei:
das erste Ansteuermodul (6031) ein erstes Ansteuerungsausführungs-Untermodul (901) umfasst, das dafür ausgelegt ist, eine Routenentfernungsbenachrichtigung an die benutzerseitige "Provider-Edge"-Vorrichtung, die der zweiten Nachbarbeziehung entspricht, zu senden; oder
das dritte Ansteuermodul (6033) ein zweites Ansteuerungsausführungs-Untermodul (1101) umfasst, das dafür ausgelegt ist, eine Standardroute an die benutzerseitige "Provider-Edge"-Vorrichtung, die der zweiten Nachbarbeziehung entspricht, bekanntzugeben, wobei die Länge eines "As-path"-Feldes in der Standardroute vergrößert wird, so dass sie größer als die Länge eines "As-path"-Feldes in einer Standardroute ist, die von anderen dienstanbieterseitigen "Provider-Edge"-Vorrichtungen an die benutzerseitige "Provider-Edge"-Vorrichtung bekanntgegeben wird.

8. Dienstanbieterseitige "Provider-Edge"-Vorrichtung nach Anspruch 7, welche ferner umfasst:
ein Konvergenzmodul (1202), das dafür ausgelegt ist, eine Anzeige, dass die Konvergenz der ersten Nachbarbeziehung erfolgt ist, von dem "Backbone"-Netz zu empfangen (304, 404; 504); und
ein erstes Wiederherstellungsmodul (1201), das dafür ausgelegt ist, eine Routenwiederherstellungsbenachrichtigung an die benutzerseitige "Provider-Edge"-Vorrichtung, die der zweiten Nachbarbeziehung entspricht, bekanntzugeben (305), nachdem das Konvergenzmodul (1202) die Anzeige empfangen hat (304, 404; 504), dass die Konvergenz der ersten Nachbarbeziehung erfolgt ist; oder
ein zweites Wiederherstellungsmodul (1301), das dafür ausgelegt ist, die zweite Nachbarbeziehung wiederherzustellen (405), nachdem das Konvergenzmodul (1202) die Anzeige empfangen hat (404), dass die Konvergenz der ersten Nachbarbeziehung erfolgt ist; oder
ein drittes Wiederherstellungsmodul (1401), das dafür ausgelegt ist, die Standardroute an die benutzerseitige "Provider-Edge"-Vorrichtung, die der zweiten Nachbarbeziehung entspricht, bekanntzugeben, wobei die Länge des "As-path"-Feldes in der Standardroute auf einen konfigurierten Wert wiederhergestellt wird (505).

9. "Route Failover"-System, welches eine benutzerseitige "Provider-Edge"-Vorrichtung und die dienstanbieterseitige "Provider-Edge"-Vorrichtung nach einem der Ansprüche 5 bis 8 umfasst.

## Revendications

1. Procédé destiné à déclencher un basculement sur une voie de secours, comprenant :
l'établissement (201 ; 301 ; 401 ; 501), par un dispositif de périphérie de fournisseur d'extrémité de fournisseur de services, d'une relation d'établissement de lien entre une première relation de voisinage et une deuxième relation de voisinage, dans lequel la deuxième relation de voisinage est établie entre le dispositif de périphérie de fournisseur d'extrémité de fournisseur de services et un dispositif de périphérie de fournisseur d'extrémité d'utilisateur ;
**caractérisé en ce que** la première relation de voisinage est établie entre le dispositif de périphérie de fournisseur d'extrémité de fournisseur de services et un dispositif de routage d'un réseau fédérateur ; et par
l'établissement, par le dispositif de périphérie de fournisseur d'extrémité de fournisseur de services, de multiples premières relations de voisinage avec de multiples dispositifs de routage dans le réseau fédérateur, respectivement, l'apprentissage de voies à partir des multiples dispositifs de routage ;
dans lequel, en ce qui concerne le cas où les voies apprises à partir des multiples dispositifs de routage sont identiques ou différentes, les variantes d'étapes de traitement suivantes destinées à déclencher le processus de basculement sur une voie de secours comprennent :
pour le cas 1 :
l'utilisation d'un opérateur logique ET pour connecter les multiples premières relations de voisinage dans la relation d'établissement de lien établie si les voies apprises sont identiques ;
la détection du fait de savoir si les multiples premières relations de voisinage sont toutes rompues ou non ; et
le déclenchement par le dispositif de périphérie de fournisseur d'extrémité de fournisseur de services de l'exécution du basculement sur une voie de secours par le dispositif de périphérie de fournisseur d'extrémité d'utilisateur si les multiples premières relations de voisinage sont toutes rompues ; ou
pour le cas 2 :
la connexion des multiples premières relations de voisinage en utilisant un opérateur logique OU dans la relation d'établissement de lien établie si les voies apprises sont différentes ;
la détection du fait de savoir si l'une quelconque des multiples premières relations de voisinage est rompue ou non ; et
le déclenchement par le dispositif de périphérie de fournisseur d'extrémité de fournisseur de services de l'exécution du basculement sur une voie de secours par le dispositif de périphérie de fournisseur d'extrémité d'utilisateur si l'une quelconque des multiples premières relations de voisinage est rompue.

2. Procédé destiné à déclencher un basculement sur une voie de secours selon la revendication 1, dans lequel le déclenchement, par le dispositif de périphérie de fournisseur d'extrémité de fournisseur de services, de l'exécution par le dispositif de périphérie de fournisseur d'extrémité d'utilisateur correspondant à la deuxième relation de voisinage du basculement sur une voie de secours comprend :
la rupture (303) d'une voie entre le dispositif de périphérie de fournisseur d'extrémité de fournisseur de services et le dispositif de périphérie de fournisseur d'extrémité d'utilisateur correspondant à la deuxième relation de voisinage ; ou
la rupture (403) de la deuxième relation de voisinage ; ou
l'abaissement (503) d'une priorité de la voie entre le dispositif de périphérie de fournisseur d'extrémité de fournisseur de services et le dispositif de périphérie de fournisseur d'extrémité d'utilisateur correspondant à la deuxième relation de voisinage afin qu'elle soit inférieure à des priorités de voies entre d'autres dispositifs de périphérie de fournisseur d'extrémité de fournisseur de services et le dispositif de périphérie de fournisseur d'extrémité d'utilisateur.

3. Procédé destiné à déclencher un basculement sur une voie de secours selon la revendication 2, dans lequel :
la rupture (303) d'une voie entre le dispositif de périphérie de fournisseur d'extrémité de fournisseur de services et le dispositif de périphérie de fournisseur d'extrémité d'utilisateur correspondant à la deuxième relation de voisinage comprend :
l'envoi d'une notification de suppression de voie au dispositif de périphérie de fournisseur d'extrémité d'utilisateur correspondant à la deuxième relation de voisinage ; et
l'abaissement (503) d'une priorité de la voie entre le dispositif de périphérie de fournisseur d'extrémité de fournisseur de services et le dispositif de périphérie de fournisseur d'extrémité d'utilisateur correspondant à la deuxième relation de voisinage comprend :
l'annonce d'une voie par défaut au dispositif de périphérie de fournisseur d'extrémité d'utilisateur correspondant à la deuxième relation de voisinage, dans lequel la longueur d'un champ de type trajet dans la voie par défaut est augmentée afin qu'elle soit supérieure à la longueur d'un champ de type trajet dans une voie par défaut annoncée par d'autres dispositifs de périphérie de fournisseur d'extrémité de fournisseur de services au dispositif de périphérie de fournisseur d'extrémité d'utilisateur.

4. Procédé destiné à déclencher un basculement sur une voie de secours selon la revendication 3, comprenant en outre :
la réception (304 ; 404 ; 504), par le dispositif de périphérie de fournisseur d'extrémité de fournisseur de services, d'une indication du fait que la convergence de la première relation de voisinage est accomplie à partir du réseau fédérateur ; et
l'annonce (305), par le dispositif de périphérie de fournisseur d'extrémité de fournisseur de services, d'une notification de récupération de voie au dispositif de périphérie de fournisseur d'extrémité d'utilisateur correspondant à la deuxième relation de voisinage ; ou
la récupération (405), par le dispositif de périphérie de fournisseur d'extrémité de fournisseur de services, de la deuxième relation de voisinage ; ou
l'annonce, par le dispositif de périphérie de fournisseur d'extrémité de fournisseur de services, de la voie par défaut au dispositif de périphérie de fournisseur d'extrémité d'utilisateur correspondant à la deuxième relation de voisinage, dans lequel la longueur du champ de type trajet dans la voie par défaut est rétablie (505) à une valeur configurée.

5. Dispositif de périphérie de fournisseur d'extrémité de fournisseur de services, comprenant :
un module d'établissement de lien (601), configuré pour établir (201 ; 301, 401 ; 501) une relation d'établissement de lien entre une première relation de voisinage et une deuxième relation de voisinage, dans lequel la deuxième relation de voisinage est établie entre le dispositif de périphérie de fournisseur d'extrémité de fournisseur de services et un dispositif de périphérie de fournisseur d'extrémité d'utilisateur ;
**caractérisé en ce que** la première relation de voisinage est établie entre le dispositif de périphérie de fournisseur d'extrémité de fournisseur de services et un dispositif de routage d'un réseau fédérateur ; et par
un premier module de traitement (1501), configuré pour établir de multiples premières relations de voisinage avec de multiples dispositifs de routage dans le réseau fédérateur, respectivement, et, après l'apprentissage de voies à partir des multiples dispositifs de routage, utiliser un opérateur logique ET pour connecter de multiples premières relations de voisinage entre le dispositif de périphérie de fournisseur d'extrémité de fournisseur de services et les multiples dispositifs de routage dans la relation d'établissement de lien si les voies apprises sont identiques, ou un deuxième module de traitement (1601) configuré pour utiliser un opérateur logique OU pour connecter de multiples premières relations de voisinage entre le dispositif de périphérie de fournisseur d'extrémité de fournisseur de services et les multiples dispositifs de routage dans la relation d'établissement de lien si les voies apprises sont différentes ;
un module de détection (602), configuré pour détecter (202 ; 302 ; 402 ; 502) ; si la première relation de voisinage est rompue ou non ; dans lequel le module de détection (602) comprend un premier sous-module de détection (6021) configuré pour détecter si la totalité des multiples premières relations de voisinage sont rompues ou non, et un deuxième sous-module de détection (6022), configuré pour détecter si une première relation de voisinage quelconque parmi les multiples premières relations de voisinage est rompue ou non ; et
un module de déclenchement (603), configuré pour déclencher (203) l'exécution par le dispositif de périphérie de fournisseur d'extrémité d'utilisateur correspondant à la deuxième relation de voisinage d'un basculement sur une voie de secours lorsque le premier sous-module de détection (6021) détecte que les multiples premières relations de voisinage sont toutes rompues, ou lorsque le deuxième sous-module de détection (6022) détecte qu'une première relation de voisinage quelconque parmi les multiples premières relations de voisinage est rompue.

6. Dispositif de périphérie de fournisseur d'extrémité de fournisseur de services selon la revendication 5, dans lequel le module de déclenchement (603) comprend :
un premier module de déclenchement (6031), configuré pour rompre (303) une voie entre le dispositif de périphérie de fournisseur d'extrémité de fournisseur de services et le dispositif de périphérie de fournisseur d'extrémité d'utilisateur correspondant à la deuxième relation de voisinage ; ou
un deuxième module de déclenchement (6032), configuré pour rompre (403) la deuxième relation de voisinage ; ou
un troisième module de déclenchement (6033), configuré pour abaisser (503) une priorité de la voie entre le dispositif de périphérie de fournisseur d'extrémité de fournisseur de services et le dispositif de périphérie de fournisseur d'extrémité d'utilisateur correspondant à la deuxième relation de voisinage afin qu'elle soit inférieure à des priorités de voies entre d'autres dispositifs de périphérie de fournisseur d'extrémité de fournisseur de services et le dispositif de périphérie de fournisseur d'extrémité d'utilisateur.

7. Dispositif de périphérie de fournisseur d'extrémité de fournisseur de services selon la revendication 6, dans lequel :
le premier module de déclenchement (6031) comprend un premier sous-module d'exécution de déclenchement (901), configuré pour envoyer une notification de suppression de voie au dispositif de périphérie de fournisseur d'extrémité d'utilisateur correspondant à la deuxième relation de voisinage ; ou
le troisième module de déclenchement (6033) comprend un deuxième sous-module d'exécution de déclenchement (1101), configuré pour annoncer une voie par défaut au dispositif de périphérie de fournisseur d'extrémité d'utilisateur correspondant à la deuxième relation de voisinage, dans lequel la longueur d'un champ de type trajet dans la voie par défaut est augmentée afin qu'elle soit supérieure à la longueur d'un champ de type trajet dans une voie par défaut annoncée par d'autres dispositifs de périphérie de fournisseur d'extrémité de fournisseur de services au dispositif de périphérie de fournisseur d'extrémité d'utilisateur.

8. Dispositif de périphérie de fournisseur d'extrémité de fournisseur de services selon la revendication 7, comprenant en outre :
un module de convergence (1202), configuré pour recevoir (304, 404 ; 504) une indication du fait que la convergence de la première relation de voisinage est accomplie à partir du réseau fédérateur ; et
un premier module de récupération (1201), configuré pour annoncer (305) une notification de récupération de voie au dispositif de périphérie de fournisseur d'extrémité d'utilisateur correspondant à la deuxième relation de voisinage après que le module de convergence (1202) a reçu (304, 404 ; 504) l'indication du fait que la convergence de la première relation de voisinage a été accomplie ; ou
un deuxième module de récupération (1301), configuré pour récupérer (405) la deuxième relation de voisinage après que le module de convergence (1202) a reçu (404) l'indication du fait que la convergence de la première relation de voisinage a été accomplie ; ou
un troisième module de récupération (1401), configuré pour annoncer la voie par défaut au dispositif de périphérie de fournisseur d'extrémité d'utilisateur correspondant à la deuxième relation de voisinage, dans lequel la longueur du champ de type trajet dans la voie par défaut est rétablie (505) à une valeur configurée.

9. Système de basculement sur une voie de secours, comprenant un dispositif de périphérie de fournisseur d'extrémité d'utilisateur et le dispositif de périphérie de fournisseur d'extrémité de fournisseur de services selon l'une quelconque des revendications 5 à 8.
